(19) Europäisches Patentamt
European Patent Office
Office européen des brevets

(11) **EP 2 028 295 B1**

(12) **EUROPEAN PATENT SPECIFICATION**

(45) Date of publication and mention
of the grant of the patent:
**25.08.2010 Bulletin 2010/34**

(51) Int Cl.:
***D01F 6/04*** *(2006.01)*      ***D01D 5/12*** *(2006.01)*

(21) Application number: **08018825.3**

(22) Date of filing: **01.09.2005**

(54) **Polyethylene yarns**

Polyethylengarne

Fils en polyéthylène

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.09.2004 US 934675**
**19.08.2005 US 206838**

(43) Date of publication of application:
**25.02.2009 Bulletin 2009/09**

(62) Document number(s) of the earlier application(s) in accordance with Art. 76 EPC:
**05857934.3 / 1 802 790**

(73) Proprietor: **Honeywell International Inc.**
**Morristown, NJ 07960 (US)**

(72) Inventors:
• **Tam, Thomas Yiu-Tai**
**Chesterfield VA 23832 (US)**
• **Moore, Ronald A.**
**Midlothian, VA 23112 (US)**
• **Twomey, Conor J.**
**Dungarvan, Co. Waterford (IE)**
• **Zhou, Quang**
**Richmond, VA 23219 (US)**
• **Arnett, Charles R.**
**Richmond, VA 23832 (US)**
• **Tan, Chok B.**
**Richmond, VA 23236 (US)**

(74) Representative: **Hucker, Charlotte Jane et al**
**Kilburn & Strode LLP**
**20 Red Lion Street**
**London**
**WC1R 4PJ (GB)**

(56) References cited:
**WO-A-00/24952      WO-A-01/73173**
**US-A- 4 551 296      US-A- 4 663 101**
**US-A- 5 443 904**

Description

## BACKGROUND OF THE INVENTION

### 1. Field of the Invention

This invention relates to drawn polyethylene muld-filament yarns and articles constructed therefrom. The drawn yarns are useful in impact absorption and ballistic resistance for body armor, helmets, breast plates, helicopter seats, spall shields, and other applications; composite sports equipment such as kayaks, canoes, bicycles and boats; and in fishing line, sails, ropes, sutures and fabrics.

### 2. Description of the Related Art

To place the present invention in perspective, it should be recalled that polyethylene had been an article of commerce for about forty years prior to the first gel-spinning process in 1979. Prior to that time, polyethylene was regarded as a low strength, low stiffness material. It had been recognized theoretically that a straight polyethylene molecule had the potential to be very strong because of the intrinsically high carbon-carbon bond strength. However, all then-known processes for spinning polyethylene fibers gave rise to "folded chain" molecular structures (lamellae) that inefficiently transmitted the load through the fiber and caused the fiber to be weak.

"Gel-spun" polyethylene fibers are prepared by spinning a solution of ultra-high molecular weight polyethylene (UHMWPE), cooling the solution filaments to a gel state, then removing the spinning solvent. One or more of the solution filaments, the gel filaments and the solvent-free filaments are drawn to a highly oriented state. The gel-spinning process discourages the formation of folded chain lamellae and favors formation of "extended chain' structures that more efficiently transmit tensile loads.

The first description of the preparation and drawing of UHMWPE filaments in the gel state was by P. Smith, P. J. Lemstra, B. Kalb and A. J. Pennings, Poly. Bull., 1, 731 (1979). Single filaments were spun from 2 wt.% solution in decalin, cooled to a gel state and then stretched while evaporating the decalin in a hot air oven at 100 to 140°C.

More recent processes (see, e.g., USP's 4,551,296, 4,663,101, and 6,448,659) describe drawing all three of the solution filaments, the gel filaments and the solvent-free filaments. A process for drawing high molecular weight polyethylene fibers is described in USP 5,741,451.See also US-A-2005/0093200.

There may be several motivations for drawing gel-spun polyethylene filaments and yarns. The end-use applications may require low filament denier or low yarn denier. Low filament deniers are difficult to produce in the gel spinning process. Solutions of UHMWPE are of high viscosity and may require excessive pressures to extrude through small spinneret openings. Hence, use of spinnerets with larger openings and subsequent drawing may be a preferable approach to producing fine denier filaments. Another motivation for drawing may be a need for high tensile properties. Tensile properties of gel-spun polyethylene filaments generally improve with increased draw ratio if appropriately conducted. Yet another motivation for drawing may be to produce a special microstructure in the filaments that may be especially favorable for particular properties, for example, ballistic resistance.

Multi-filament "gel spun" ultra-high molecular weight polyethylene (UHMWPE) yarns are produced today by a number of companies, including Honeywell International Inc., DSM N.V., Toyobo Co., Ltd., Ningbo Dacheng and Tongyizhong Specialty Fibre Technology and Development Co., Ltd.

Although gel-spinning processes tend to produce fibers that are free of lamellae with folded chain surfaces, nevertheless the molecules in gel-spun UHMWPE fibers are not free of *gauche* sequences as can be demonstrated by infra-red and Raman spectrographic methods. The *gauche* sequences are kinks in the zig-zag polyethylene molecule that create dislocations in the orthorhombic crystal structure. The strength of an ideal extended chain polyethylene fiber with all *trans* -$(CH_2)_n$-sequences has been variously calculated to be much higher than has presently been achieved. While fiber strength and multi-filament yarn strength are dependent on a multiplicity of factors, a more perfect polyethylene fiber structure, consisting of molecules having longer runs of straight chain all *trans* sequences, is expected to exhibit superior performance in a number of applications such as ballistic protection materials.

A need exists, therefore, for gel-spun multi-filament UHMWPE yarns having increased perfection of molecular structure. One measure of such perfection is longer runs of straight chain all *trans* -$(CH_2)_n$-sequences as can be determined by Raman spectroscopy. Another measure is a greater "Parameter of Intrachain Cooperativity of the Melting Process" as can be determined by differential scanning calorimetry (DSC). Yet another measure is the existence of two orthorhombic crystalline components as can be determined by x-ray diffraction. Still another measure is a unique dynamic mechanical analysis (DMA) signature reflective of a more ordered microstructure.

Dynamic mechanical analysis (DMA) is the technique of applying a dynamic stress or strain to a sample and analyzing the response to obtain mechanical properties such as storage modulus (E'), loss modulus (E") and damping or tan delta (δ) as a function of temperature and/or frequency. An introductory description of DMA as applied to polymers has been presented by K.P. Menard in "Encyclopedia of Polymer Science and Technology", Volume 9, P.563-589, John Wiley & Sons, Hoboken, NJ, 2004. Menard indicates that DMA is very sensitive to molecular motions of polymer chains and is a powerful tool for measuring transitions in such motions. Temperature regions in which transitions in molecular motion occur are marked by departure of E', E" or tan $\delta$ from base line trends and are variously termed "relaxations" and "dispersions" by investigators. DMA studies of many polymers have identified three temperature regions associated with dispersions designated alpha ($\alpha$), beta ($\beta$) and gamma ($\gamma$).

Khanna et al., Macromolecules, 18, 1302-1309 (1985), in a study of polyethylenes having a range of densities (linearity), attributed the $\alpha$-dispersion to molecular motions of chain folds, loops, and tie molecules at the interfacial regions of crystalline lamellae. The intensity of the $\alpha$-dispersion increased with increasing lamellar thickness. The $\beta$-dispersion was attributed to molecular motions in the amorphous interlamellar regions. The origin of the $\gamma$-dispersion was not clear but was suggested to involve mostly the amorphous regions. Khanna et al. note that K.M.Sinnott, J. Appl Phys., 37, 3385 (1966) proposed that the $\gamma$-dispersion was due to defects in the crystalline phase. In the same study, Khanna et al. associated the $\alpha$-dispersion with transitions in molecular motions above about 5°C, the $\beta$-dispersion with transitions between about -70°C and 5°C, and the $\gamma$-dispersion with a transition between about -70°C and -120°C.

R.H. Boyd, Polymer, 26, 323 (1985) found that as crystallinity increased, the $\gamma$-dispersion tended to broaden. Roy et al., Macromolecules, 21(6),1741 (1988) in a study of UHMWPE films gel-cast from very dilute solution (0.4% w/v) found that the $\gamma$-dispersion disappeared when the sample was hot drawn in the solid state in the region beyond 150:1. K.P. Menard (citation above) noted a correlation between toughness and the $\beta$-dispersion.

USP 5,443,904 suggested that high values of tan $\delta$ in the $\gamma$-dispersion could be indicative of excellent resistance to high speed impact, and that high peak temperature of the loss modulus in the $\alpha$-dispersion was indicative of excellent physical properties at room temperature. -

It is among the objectives of this invention to provide yarns having exceptionally highly ordered molecular microstructures, and articles produced from those yarns, including articles having superior ballistic properties.

## SUMMARY OF THE INVENTION

According to the present invention, a novel polyethylene multi-filament yarn comprises a polyethylene having an intrinsic viscosity in decalin at 135°C of from about 5 dl/g to 35 dl/g, fewer than about two methyl groups per thousand carbon atoms, and less than about 2 wt.% of other constituents, the multi-filament yarn having a tenacity of at least 17 g/d as measured by ASTM D2256-02, wherein filaments of the yarn have a peak value of the ordered-sequence length distribution function F(L) at a straight chain segment length L of at least 40 nanometers as determined at 23°C from the low frequency Raman band associated with the longitudinal acoustic mode (LAM-1).

In particular embodiments, filaments of the yarns have a value of the "Parameter of Intrachain Cooperativity of the Melting Process", $\nu$, of at least about 535, and/or the intensity of the (002) x-ray reflection of one filament of the yarn, measured at room temperature and under no load, shows two distinct peaks.

The invention also includes articles comprising the inventive yarns.

## BRIEF DESCRIPTION OF THE DRAWINGS

**Figure 1** is the low frequency Raman spectrum and extracted LAM-1 spectrum of filaments of a commercially available gel-spun multi-filament UHMWPE yarn (SPECTRA® 900 yam).

**Figure 2(a)** is a plot of the ordered sequence length distribution function F(L) determined from the LAM-1 spectrum of Figure 1.

**Figure 2(b)** is a plot of the ordered sequence length distribution function F(L) determined from the LAM-1 spectrum of a commercially available gel-spun multi-filament UHMWPE yarn (SPECTRA® 1000 yarn).

**Figure 2(c)** is a plot of the ordered sequence length distribution function F(L) determined from the LAM-1 spectrum of filaments of the invention,

**Figure 3** shows differential scanning calorimetry (DSC) scans at heating rates of 0.31, 0.62 and 1.25 °K/min of a 0.03 mg filament segment taken from a multi-filament yarn of the invention chopped into pieces of 5 mm length and wrapped in parallel array in a Wood's metal foil and placed in an open sample pan.

**Figure 4** shows an x-ray pinhole photograph of a single filament taken from multi-filament yarn of the invention.

**Figure 5** shows plots of loss moduli at DMA frequencies of 10 and 100 radians/sec of a first prior art drawn UHMWPE yarn.

**Figure 6** shows plots of loss moduli at DMA frequencies of 10 and 100 radians/sec of a second prior art drawn UHMWPE yarn.

**Figure 7** shows plots of loss moduli at DMA frequencies of 10 and 100 radians/sec of a third prior art drawn UHMWPE yarn.

**Figure 8** shows plots of loss moduli at DMA frequencies of 10 and 100 radians/sec of a fourth prior art drawn UHMWPE yarn.

**Figure 9** shows plots of loss moduli at DMA frequencies of 10 and 100 radians/sec of a fifth prior art drawn UHMWPE yarn.

**Figures 10-12** show plots of loss moduli at DMA frequencies of 10 and 100 radians/sec of drawn UHMWPE multi-filament yarns of this invention.

## DETAILED DESCRIPTION OF THE INVENTION

A process for drawing a gel-spun multi-filament yarn comprising the steps of:

a) forming a gel-spun polyethylene multi-filament feed yarn comprising a polyethylene having an intrinsic viscosity in decalin at 135°C of from 5 dl/g to 35 dl/g, fewer than two methyl groups per thousand carbon atoms, and less than 2 wt.% of other constituents;

b) passing the feed yarn at a speed of $V_1$ meters/minute into a forced convection air oven having a yarn path length of **L** meters, wherein one or more zones are present along the yarn path having zone temperatures from 130°C to160°C;

c) passing the feed yarn continuously through the oven and out of the oven at an exit speed of $V_2$ meters/minute wherein the following equations 1 to 4 are satisfied

$$0.25 \leq L/V_1 \leq 20 \text{ , min} \qquad \text{Eq. 1}$$

$$3 \leq V_2/V_1 \leq 20 \qquad \text{Eq. 2}$$

$$1.7 \leq (V_2 - V_1)/L \leq 60 \text{ , min}^{-1} \qquad \text{Eq. 3}$$

$$0.20 \leq 2L/(V_1+V_2) \leq 10 \text{ , min .} \qquad \text{Eq. 4}$$

For purposes of the present invention, a fiber is an elongate body the length dimension of which is much greater than the transverse dimensions of width and thickness. Accordingly, "fiber" as used herein includes one, or a plurality of filaments, ribbons, strips, and the like having regular or irregular cross-sections in continuous or discontinuous lengths. A yarn is an assemblage of continuous or discontinuous fibers.

Preferably, the multi-filament feed yarn to be drawn, in particular in the above process, comprises a polyethylene having an intrinsic viscosity in decalin of from 8 to 30 dl/g, more preferably from 10 to 25 dl/g, and most preferably from 12 to 20 dl/g. Preferably, the multi-filament yarn to be drawn comprises a polyethylene having fewer than one methyl group per thousand carbon atoms, more preferably fewer than 0.5 methyl groups per thousand carbon atoms, and less than 1 wt.% of other constituents.

The gel-spun polyethylene multi-filament yarn to be drawn in the above-described process may have been previously draw, or it may be in an essentially undrawn state. The process for forming the gel-spun polyethylene feed yarn can be one of the processes described by USP's 4,551,296, 4,663,101, 5,741,451, and 6,448,659.

The tenacity of the feed yarn may range from 2 to 76, preferably from 5 to 66, more preferably from 7 to 51, grams per denier (g/d) as measured by ASTM D2256-02 at a gauge length of 10 inches (25.4 cm) and at a strain rate of 100%/min.

It is known that gel-spun polyethylene yarns may be drawn in an oven, in a hot tube, between heated rolls, or on a heated surface. WO 02/34980 A1 describes a particular drawing oven. We have found that drawing of gel-spun UHMWPE multi-filament yarns is most effective and productive if accomplished in a forced convection air oven under narrowly defined conditions. It is necessary that one or more temperature-controlled zones exist in the oven along the yarn path, each zone having a temperature from 130°C to 160°C. Preferably the temperature within a zone is controlled to vary less than $\pm 2$°C (a total less than 4°C), more preferably less than $\pm 1$°C (a total less than 2°C).

The yarn will generally enter the drawing oven at a temperature lower than the oven temperature. On the other hand, drawing of a yarn is a dissipative process generating heat. Therefore to quickly heat the yarn to the drawing temperature, and to maintain the yarn at a controlled temperature, it is necessary to have effective heat transmission between the yarn and the oven air. Preferably, the air circulation within the oven is in a turbulent state. The time-averaged air velocity in the vicinity of the yarn is preferably from 1 to 200 meters/min, more preferably from 2 to 100 meters/min, most preferably from 5 to 100 meters/min.

The yarn path within the oven may be in a straight line from inlet to outlet. Alternatively, the yarn path may follow a reciprocating ("zig-zag") path, up and down, and/or back and forth across the oven, around idler rolls or internal driven rolls. It is preferred that the yarn path within the oven is a straight line from inlet to outlet.

The yarn tension profile within the oven is adjusted by controlling the drag on idler rolls, by adjusting the speed of internal driven rolls, or by adjusting the oven temperature profile. Yam tension may be increased by increasing the drag on idler rolls, increasing the difference between the speeds of consecutive driven rolls or decreasing oven temperature. The yarn tension within the oven may follow an alternating rising and falling profile, or it may increase steadily from inlet to outlet, or it may be constant. Preferably, the yarn tension everywhere within the oven is constant neglecting the effect of air drag, or it increases through the oven. Most preferably, the yarn tension everywhere within the oven is constant neglecting the effect of air drag.

The above-described drawing process provides for drawing multiple yarn ends simultaneously. Typically, multiple packages of gel-spun polyethylene yarns to be drawn are placed on a creel. Multiple yarns encs are fed in parallel from the creel through a first set of rolls that set the feed speed into the drawing oven, and thence through the oven and out to a final set of rolls that set the yarn exit speed and also cool the yarn to room temperature under tension. The tension in the yarn during cooling is maintained sufficient to hold the yarn at its drawn length neglecting thermal contraction.

The productivity of the drawing process may be measured by the weight of drawn yarn that can be produced per unit of time per yarn end. Preferably, the productivity of the process is more than 2 grams/minute per yarn end, more preferably more than 4 grams/minute per yarn end.

The invention is a novel polyethylene multi-filament yarn comprising a polyethylene having an intrinsic viscosity in decalin at 135°C of from 5 dl/g to 35 d/g, fewer than two methyl groups per thousand carbon atoms, and less than 2 wt.% of other constituents, the multi-filament yarn having a tenacity of at least 17 g/d as measured by ASTM D2256-02, wherein filaments of the yarn have a peak value of the ordered-sequence length distribution function F(L) at a straight chain segment length L of at least 40 nanometers as determined at 23°C from the low frequency Raman band associated with the longitudinal acoustic mode (LAM-1).

Preferably, a polyethylene yarn of the invention has an intrinsic viscosity in decalin at 135°C of from 7 dl/g to30 dl/g, fewer than one methyl group per thousand carbon atoms, less than 1 wt.% of other constituents, and a tenacity of at least 22 g/d.

The drawn polyethylene multi-filament yarns may have unique DMA signatures reflective of unique microstructure and superior ballistic properties.

The invention also includes articles comprising the inventive yarns. The articles of the invention are preferably comprised of networks of the inventive yarns. By network is meant the fibers of the yarns arranged in configurations of various types. For example, the fibers of the yarns may be formed into a felt, a knitted or woven fabric, a non-woven fabric (random or ordered orientation), arranged in parallel array, layered or formed into a fabric by any of a variety of conventional techniques.

Preferably, the articles of the invention are comprised of at least one network of the inventive yarns. More preferably, an article of the invention is comprised of a plurality of networks of the inventive yarns, the: networks being arranged in unidirectional layers, the direction of the fibers in one layer being at an angle to the direction of the fibers in adjacent layers.

The drawn gel-spun multi-filament yarns and articles of the invention possess superior ballistic resistant properties.

### Measurement Methods

#### 1. Raman Spectroscopy

Raman spectroscopy measures the change in the wavelength of light that is scattered by molecules. When a beam of monochromatic light traverses a semi- transparent material, a small fraction of the light is scattered in directions other than the direction of the incident beam. Most of this scattered light is of unchanged frequency. However, a small fraction is shifted in frequency from that of the incident light. The energies corresponding to the Raman frequency shifts are found to be the energies of rotational and vibrational quantum transitions of the scattering molecules. In semi-crystalline polymers containing *all-trans* sequences, the longitudinal acoustic vibrations propagate along these *all-trans* segments as they would along elastic rods. The chain vibrations of this kind are called longitudinal acoustic modes (LAM), and these modes produce specific bands in the low frequency Raman spectra. *Gauche* sequences produce kinks in the polyethylene chains that delimit the propagation of acoustic vibrations. It will be understood that in a real material a statistical distribution exists of the lengths of all-*trans* segments. A more perfectly ordered material will have a distribution of *all*-trans segments different from a less ordered material. An article titled, "Determination of the Distribution of Straight-Chain Segment Lengths in Crystalline Polyethylene from the Raman LAM-1 Band", by R.G. Snyder et al, J. Poly. Sci., Poly. Phys. Ed., 16, 1593-1609 (1978) describes the theoretical basis for determination of the ordered-sequence length distribution function, F(L) from the Raman LAM-1 spectrum.

F(L) is determined as follows: Five or six filaments are withdrawn from the multi-filament yarn and placed in parallel alignment abutting one another on a frame such that light from a laser can be directed along and through this row of fibers perpendicular to their length dimension. The laser light should be substantially attenuated on passing sequentially through the fibers. The vector of light polarization is collinear with the fiber axis, (XX light polarization).

Spectra are measured at 23°C on a spectrometer capable of detecting the Raman spectra within a few wave numbers (less than about 4 cm$^{-1}$) of the exciting light. An example of such a spectrometer is the SPEX Industries, Inc, Metuchen, New Jersey, Model RAMALOG® 5, monochromator spectrometer using a He-Ne laser. The Raman spectra are recorded in 90° geometry, i.e., the scattered light is measured and recorded at an angle of 90 degrees to the direction of incident light. To exclude the contribution of the Rayleigh scattering, a background of the LAM spectrum in the vicinity of the central line must be subtracted from the experimental spectrum. The background scattering is fitted to a Lorentzian function of the form given by Eq. 5 using the initial part of the Raman scattering data, and the data in the region 30-60 cm$^{-1}$ where there is practically no Raman scattering from the samples, but only background scattering.

$$f(x)) = \frac{H}{4 \bullet \left( \dfrac{x - x_0}{w} \right)^2 + 1} \qquad \text{Eq. 5}$$

where:

x$_0$ is the peak position
H is the peak height
w is the full width at half maximum

Where the Raman scattering is intense near the central line in the region from 4 cm$^{-1}$ to 6 cm$^{-1}$, it is necessary to record the Raman intensity in this frequency range on a logarithmic scale and match the intensity recorded at a frequency of 6 cm$^{-1}$ to that measured on a linear scale. The Lorentzian function is subtracted from each separate recording and the extracted LAM spectrum is spliced together from each portion.

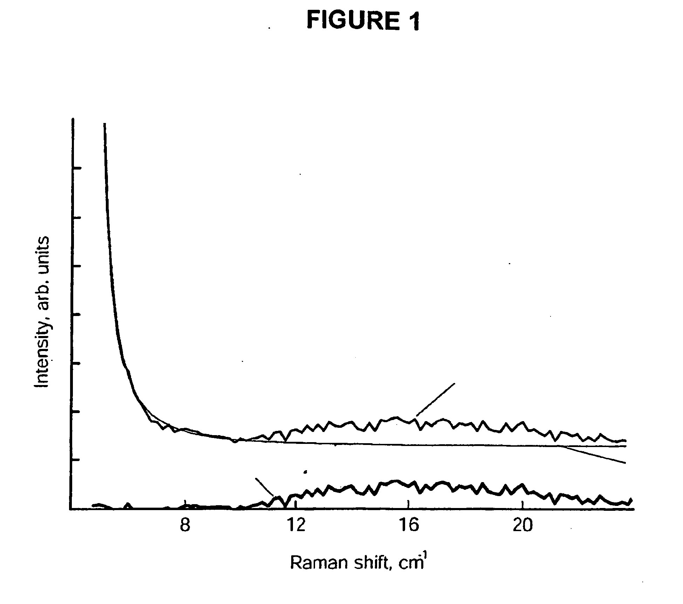

Figure 1 shows the measured Raman spectra for a fiber material to be described below and the method of subtraction of the background and the extraction of the LAM spectrum.

The LAM-1 frequency, is inversely related to the straight chain length, L as expressed by Eq. 6.

$$L = \frac{1}{2c\omega_L} \left( \frac{E g_c}{\rho} \right)^{1/2} \qquad \text{Eq. 6}$$

where:

c is the velocity of light, 3 x 10$^{10}$ cm/sec
ω$_L$ is the LAM-1 frequency, cm$^{-1}$
E is the elastic modulus of a polyethylene molecule, g(f)/cm$^2$
ρ is the density of a polyethylene crystal, g(m)/cm$^3$
g$_c$ is the gravitational constant 980 (g(m)-cm)/((g(f)-sec$^2$)

For the purposes of this invention, the elastic modulus E, is taken as 340 GPa as reported by Mizushima et al., J. Amer. Chem., Soc., 71, 1320 (1949). The quantity (g$_c$E/p)$^{1/2}$ is the sonic velocity in an all *trans* polyethylene crystal. Based on an elastic modulus of 340 GPa, and a crystal density of 1.000 g/cm$^3$, the sonic velocity is 1.844 x 10$^6$ cm/sec.

Making that substitution in Eq. 6, the relationship between the straight chain length and the LAM-1 frequency as used herein is express by Eq. 7.

$$L = \frac{307.3}{\omega_L}, \text{ nanometers} \qquad\qquad \text{Eq. 7}$$

The "ordered-sequence length distribution function", F(L), is calculated from the measured Raman LAM-1 spectrum by means of Eq. B.

$$F(L) = \left[1 - \exp\left(-\frac{hc\omega_L}{kT}\right)\omega_L{}^2 I_\omega\right], \text{ arbitrary units} \qquad\qquad \text{Eq. 8}$$

where:

h is Plank's constant, $6.6238 \times 10^{-27}$ erg-cm
k is Boltzmann's constant, $1.380 \times 10^{-16}$ erg/°K
$I_\omega$ is the intensity of the Raman spectrum at frequency $\omega_L$, arbitrary units
T is the absolute temperature, °K

and the other terms are as previously defined.

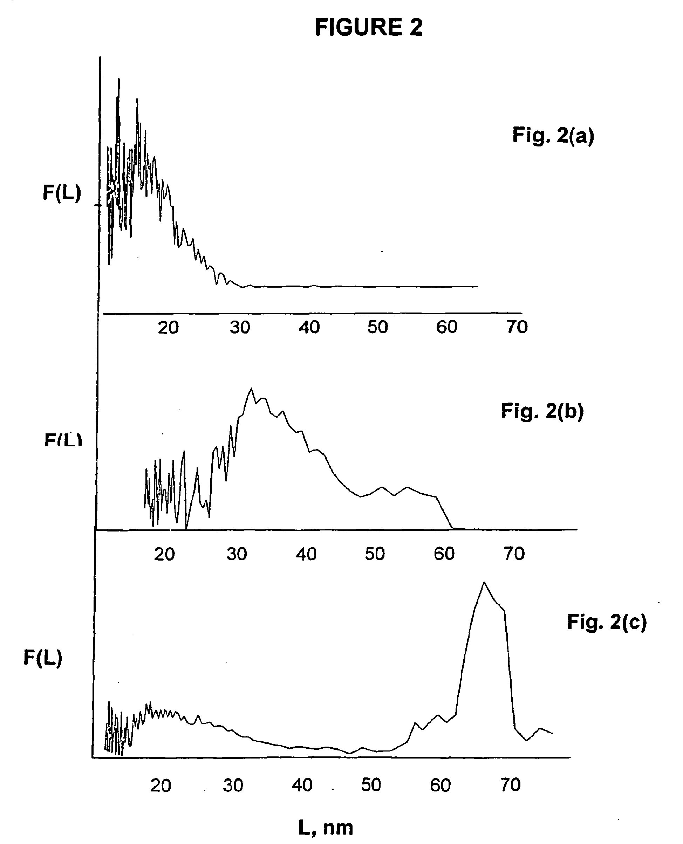

Plots of the ordered-sequence length distribution function, F(L) derived from the Raman LAM-1 spectra for three polyethylene samples to be described below are shown in Figures 2(a), 2(b) and 2(c).

Preferably, a polyethylene yarn of the invention is comprised of filaments for which the peak value of F(L) is at a straight chain segment length L of at least 45 nanometers as determined at 23°C from the low frequency Raman band associated with the longitudinal acoustic mode (LAM-1). The peak value of F(L) preferably is at a straight chain segment length L of at least 50 nanometers, more preferably at least 55 nanometers, and most preferably 50-150 nanometers.

2. Differential Scanning Calorimetry (DSC)

It is well known that DSC measurements of UHMWPE are subject to systematic errors cause by thermal lags and inefficient heat transfer. To overcome the potential effect of such problems, for the purposes of the invention the DSC measurements are carried out in the following manner. A filament segment of about 0.03 mg mass is cut into pieces of about 5 mm length. The cut pieces are arranged in parallel array and wrapped in a thin Wood's metal foil and placed in an open sample pan. DSC measurements of such samples are made for at least three different heating rates at or below 2°K/min and the resulting measurements of the peak temperature of the first polyethylene melting endotherm are extrapolated to a heating rate of 0°K/min.

A "Parameter of Intrachain Cooperativity of the Melting Process", represented by the Greek letter ν, has been defined by V.A. Bershtein and V.M. Egorov, in "Differential Scanning Calorimetry of Polymers: Physics, Chemistry, Analysis, Technology", P. 141-143, Tavistoc/Ellis Horwod, 1993. This parameter is a measure of the number of repeating units, here taken as (-CH₂-CH₂-), that cooperatively participate in the melting process and is a measure of crystallite size. Higher values of ν indicate longer crystalline sequences and therefore a higher degree of order. The "Parameter of Intrachain Cooperativity of the Melting Process" is defined herein by Eq. 9.

$$\nu = 2R\frac{T_{m1}^2}{\Delta T_{m1} \cdot \Delta H^0}, \text{ dimensionless} \qquad\qquad \text{Eq. 9}$$

where:

R is the gas constant, 8.31 J/°K-mol
$T_{m1}$ is the peak temperature of the first polyethylene melting endotherm at a heating rate extrapolated to 0°K/min, °K
$\Delta T_{m1}$ is the width of the first polyethylene melting endotherm, °K
$\Delta H^0$ is the melting enthalpy of -CH₂-CH₂- taken as 8200 J/mol

The multi-filament yarns of the invention are comprised of filaments having a "Parameter of Intrachain Cooperativity of the Melting Process", ν, of at least 535, preferably at least 545, more preferably at least 555, and most preferably from 545 to 1100.

3. X-Ray Diffraction

A synchrotron is used as a source of high intensity x-radiation. The synchrotron x-radiation is monochromatized and collimated. A single filament is withdrawn from the yarn to be examined and is placed in the monochromatized and collimated x-ray beam. The x-radiation scattered by the filament is detected by electronic or photographic means with the filament at room temperature (~ 23°C) and under no external load. The position and intensity of the (002) reflection of the orthorhombic polyethylene crystals are recorded. If upon scanning across the (002) reflection, the slope of scattered intensity versus scattering angle changes from positive to negative twice, i.e., if two peaks are seen in the (002) reflection, then two orthorhombic crystalline phases exist within the fiber.

4. Dynamic Mechanical Analysis

Dynamic mechanical analysis (DMA) is the technique of applying a dynamic stress or strain to a sample and analyzing the response to obtain mechanical properties such as storage modulus (E'), loss modulus (E") and damping or tan delta ($\delta$) as a function of temperature and/or frequency.

DMA instruments may be of different types and have different modes of operation that may effect the results obtained. A DMA instrument may impose a forced frequency on the sample or the instrument may be of a free resonance type. A forced frequency instrument may be operated in different modes (stress controlled or strain controlled). Since most dynamic mechanical analyses of polymers are run over a range of temperatures where the static force in the sample may change as a result of sample shrinkage, thermal expansion, or creep, it is necessary to have some mechanism to adjust the sample tension when temperature is changed. The DMA instrument may be run with a constant static force set at the start of the test to a value greater than the maximum dynamic force observed during the test. In this mode, the sample is prone to elongate as it softens on heating, resulting in a possible change in morphology. Alternatively, the DMA instrument may automatically control and adjust the static force to be a certain percent greater than the dynamic force. In this mode, the sample elongation and morphology change during the test are minimized and the DMA properties measured will be more representative of the original sample before heating.

The inventive yarns and several prior art yarns have been characterized by DMA in a proportional force mode in tension with the static force held at 110% of dynamic force, the dynamic strain at 0.025 ± 0.005%, the heating rate at 2.7 ± 0.8 °C/min, and the frequency at 10 and 100 radians/sec. The DMA instrument employed was a model RSA II from Rheometrics Scientific (now TA Instruments, New Castle Delaware). This DMA instrument is of the strain controlled type.

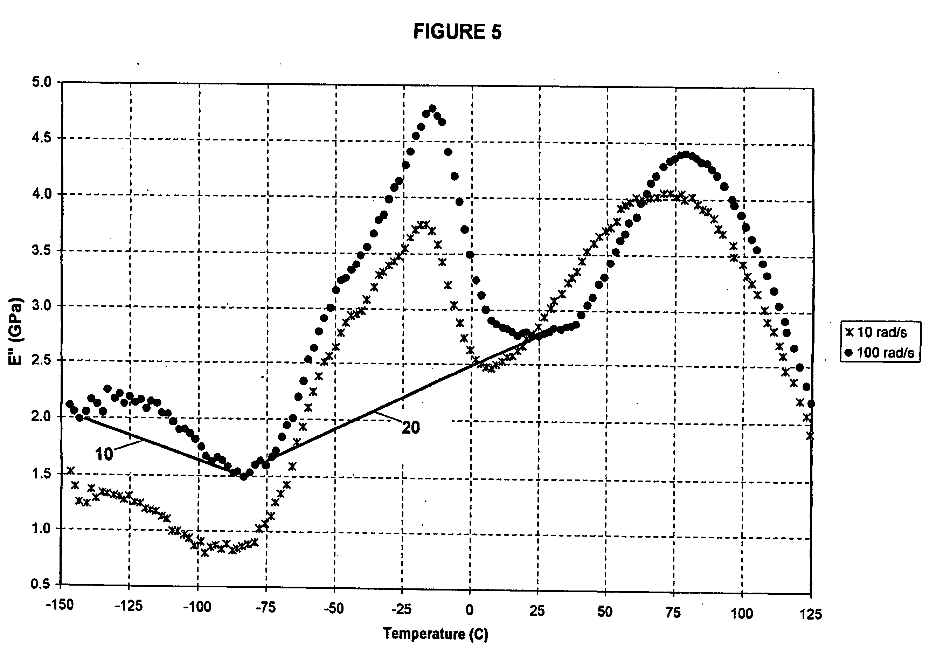

For the purposes of this invention, temperature regions where the loss modulus, E", departs from a base line trend are termed "dispersions". An $\alpha$-dispersion is defined as one occurring in a temperature region above 5°C, a $\beta$-dispersion is one occurring in a temperature region from -70°C to 5°C, and a $\gamma$-dispersion is one occurring in a temperature region from - 70°C to -120°C. The $\beta$-dispersion may have two components. The components of the $\beta$-dispersion may be a shoulder and a distinct peak or the components may be two distinct peaks. The integral strength of the $\beta$-dispersion is defined as the area between the DMA loss modulus plot and a base line drawn through the wings of the entire $\beta$-dispersion, measured in units of GPa-°C as illustrated in Figure 5.

The following examples are presented to provide a more complete understanding of the invention. The specific techniques, conditions, materials, proportions and reported data set forth to illustrate the principles of the invention are exemplary and should not be construed as limiting the scope of the invention.

## EXAMPLES

## Comparative Example 1

An UHMWPE gel-spun yarn designated SPECTRA® 900 was manufactured by Honeywell International Inc. in accord with USP 4,551,296. The 650 denier yarn consisting of 60 filaments had an intrinsic viscosity in decalin at 135°C of about 15 dl/g. The yarn tenacity was about 30 g/d as measured by ASTM D2256-02, and the yarn contained less than about 1 wt.% of other constituents. The yarn had been stretched in the solution state, in the gel state and after removal of the spinning solvent. The stretching conditions did not fall within the scope of equations 1 to 4, above.

Filaments of this yarn were characterized by Raman spectroscopy using a Model RAMALOG® 5, monochromator spectrometer made by SPEX industries, Inc., Metuchen, NJ, using a He-Ne laser and the methodology described herein above. The measured Raman spectrum, 1, and the extracted LAM-1 spectrum for this material, 3, after subtraction of the Lorenzian, 2, fitted to the Rayleigh background scattering are shown in Fig. 1(a). The ordered-sequence length distribution function, F(L), for this material determined from the LAM-1 spectrum and equations 7 and 8 is shown in Fig. 2(a). The peak value of the ordered-sequence length distribution function, F(L), was at a straight chain segment length L of approximately 12 nanometers (Table I).

Filaments of this yarn were also characterized by DSC using the methodology described hereinabove. The peak temperature of the first polyethylene melting endotherm at a heating rate extrapolated to 0°K/min, was 415.4 °K. The width of the first polyethylene melting endotherm was 0.9 °K. The "Parameter of Intrachain Cooperativity of the Melting Process", $\nu$, determined from Eq. 9 was 389 (Table I).

A single filament taken from this yarn was examined by x-ray diffraction using the methodology described hereinabove. Only one peak was seen in the (002) reflection (Table 1).

## Comparative Example 2

An UHMWPE gel-spun yarn designated SPECTRA® 1000 was manufactured by Honeywell International Inc. in accord with USP's 4,551,296 and 5,741,451. The 1300 denier yarn consisting of 240 filaments had an intrinsic viscosity in decalin at 135°C of about 14 dl/g. The yarn tenacity was about 35 g/d as measured by ASTM D2256-02, and the yarn contained less than 1 wt.% of other constituents. The yarn had been stretched in the solution state, in the gel state and after removal of the spinning solvent. The stretching conditions did not fall within the scope of equations 1 to 4, above.

Filaments of this yarn were characterized by Raman spectroscopy using a Model RAMALOG® 5, monochromator spectrometer made by SPEX Industries, Inc., Metuchen, NJ, using a He-Ne laser and the methodology described hereinabove. The ordered-sequence length distribution function, F(L), for this material determined from the LAM-1 spectrum and equations 7 and 8 is shown in Fig. 2(b). The peak value of the ordered-sequence length distribution function, F(L), was at a straight chain segment length L of approximately 33 nanometers (Table I).

Filaments of this yarn were also characterized by DSC using the methodology described hereinabove. The peak temperature of the first polyethylene melting endotherm at a heating rate extrapolated to 0°K/min, was 415.2 °K. The width of the first polyethylene melting endotherm was 1.3 °K. The "Parameter of Intrachain Cooperativity of the Melting Process", $\nu$, determined from Eq. 9 was 466 (Table I).

A single filament taken from this yarn was examined by x-ray diffraction using the methodology described hereinabove. Only one peak was seen in the (002) reflection (Table 1).

## Comparative Examples 3-7

UHMWPE gel spun yarns from different lots manufactured by Honeywell International Inc. and designated either SPECTRA® 900 or SPECTRA® 1000 were characterized by Raman spectroscopy, DSC, and x-ray diffraction using the methodologies described hereinabove. The description of the yarns and the values of F(L) and $\nu$ are listed in Table I as well as the number of peaks seen in the (002) x-ray reflection. -

## Example 1

An UHMWPE gel spun yarn was produced by Honeywell International Inc. in accord with USP 4,551,296. The 2060 denier yarn consisting of 120 filaments had an intrinsic viscosity in decalin at 135°C of about 12 dl/g. The yarn tenacity was about 20 g/d as measured by ASTM D2256-02, and the yarn contained less than about 1 wt.% of other constituents. The yarn had been stretched between 3.5 and 8 to 1 in the solution state, between 2.4 and 4 to 1 in the gel state and between 1.05 and 1.3 to 1 after removal of the spinning solvent.

The yarn was fed from a creel, through a set of restraining rolls at a speed ($V_1$) of about 25 meters/min into a forced convection air oven in which the internal temperature was 155 $\pm$ 1°C. The air circulation within the oven was in a turbulent state with a time-averaged velocity in the vicinity of the yarn of about 34 meters/min.

The feed yarn passed through the oven in a straight line from inlet to outlet over a path length (L) of 14.63 meters and thence to a second set of rolls operating at a speed ($V_2$) of 98.8 meters/min. The yarn was cooled down on the second set of rolls at constant length neglecting thermal contraction. The yarn was thereby drawn in the oven at constant tension neglecting the effect of air drag. The above drawing conditions in relation to Equations 1-4 were as follows:

$$0.25 \leq [ L/V_1 = 0.59 ] \leq 20 , \text{ min} \qquad \text{Eq. 1}$$

$$3 \leq [ V_2/V_1 = 3.95 ] \leq 20 \qquad \text{Eq. 2}$$

$$1.7 \leq [\,(V_2 - V_1)/\,L \approx 5.04] \leq 60 \,,\ \text{min}^{-1} \qquad \text{Eq. 3}$$

$$0.20 \leq [\,2L/(V_1+V_2) = 0.24\,] \leq 10 \,,\ \text{min} \qquad \text{Eq. 4}$$

Hence, each of Equations 1-4 was satisfied.

The denier per filament (dpf) was reduced from 17.2 dpf for the feed yarn to 4.34 dpf for the drawn yarn. Tenacity was increased from 20 g/d for the feed yarn to about 40 g/d for the drawn yarn. The mass throughput of drawn yarn was 5.72 grams/min per yarn end.

Filaments of this yarn were characterized by Raman spectroscopy using a Model RAMALOG® 5, monochromator spectrometer made by SPEX Industries, Inc., Metuchen, NJ, using a He-Ne laser and the methodology described hereinabove. The ordered-sequence length distribution function, F(L), for this material determined from the LAM-1 spectrum and equations 7 and 8 is shown in Fig. 2(c). The peak value of the ordered-sequence length distribution function, F(L), was at a straight chain segment length L of approximately 67 nanometers (Table I).

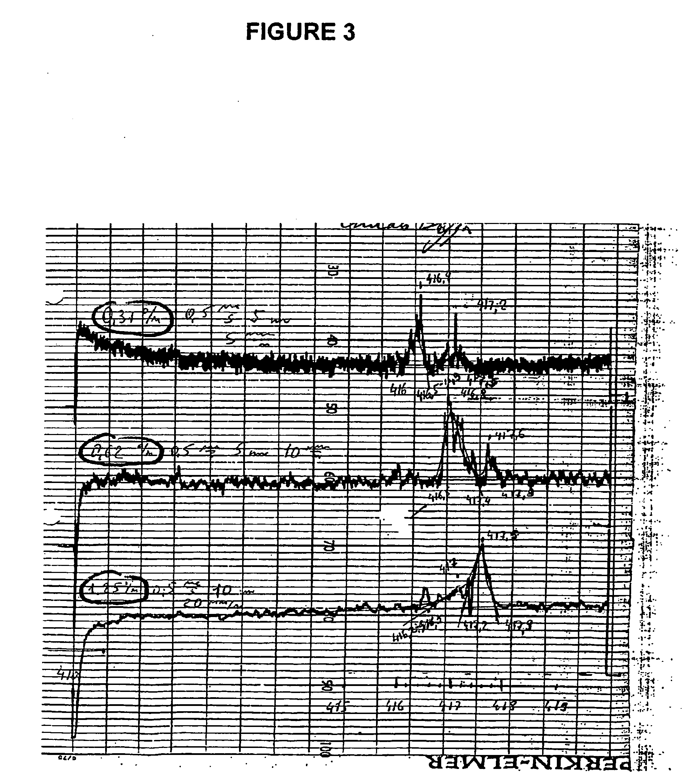

Filaments of this yarn were also characterized by DSC using the methodology described hereinabove. DSC scans at heating rates of 0.31°K/min, 0.62 °K/min, and 1.25°K/min are shown in Fig. 3. The peak temperature of the first polyethylene melting endotherm at a heating rate extrapolated to 0°K/min, was 416.1 °K. The width of the first polyethylene melting endotherm was 0.6 °K. The "Parameter of Intrachain Cooperativity of the Melting Process", v, determined from Eq. 9 was 585 (Table I).

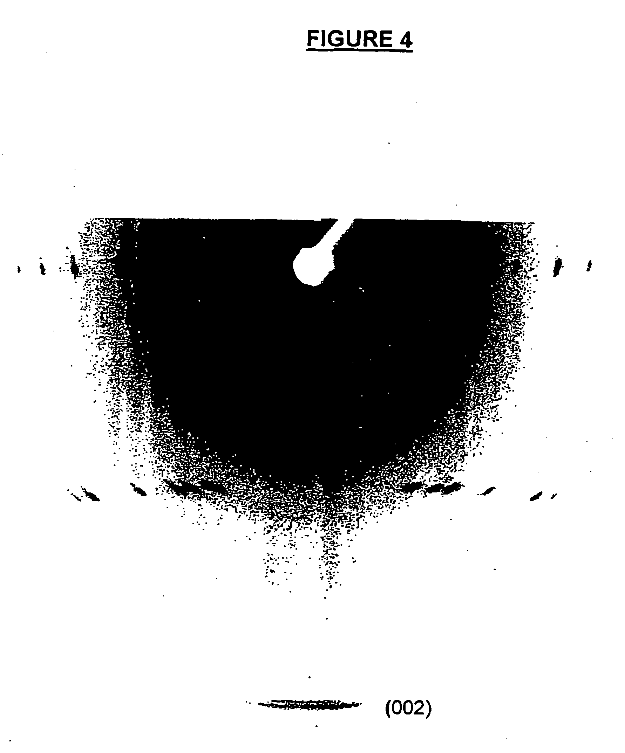

A single filament taken from this yarn was examined by x-ray diffraction using the methodology described hereinabove. An x-ray pinhole photograph of the filament is shown in Figure 4. Two peaks were seen in the (002) reflection.

It is seen that filaments of the yarn of the invention had a peak value of the ordered-sequence length distribution function, F(L), at a straight chain segment length, L, greater than the prior art yarns. It is also seen that filaments of the yarn of the invention had a "Parameter of Intrachain Cooperativity of the Melting Process", v, greater than the prior art yarns. Also, this appears to be the first observation of two (002) x-ray peaks in a polyethylene filament at room temperature under no load.

Table I

| Ex. or Comp. Ex. No. | Identification | Denier/Fils | L, nm at peak of F (L) | v, dimensionless | No. of (002) X-Ray Peaks |
|---|---|---|---|---|---|
| Comp. Ex. 1 | SPECTRA® 900 yarn | 650/60 | 12 | 389 | 1 |
| Comp. Ex. 2 | SPECTRA® 1000 yarn | 1300/240 | 33 | 466 | 1 |
| Comp. Ex. 3 | SPECTRA® 900 yarn | 650/60 | 28 | 437 | 1 |
| Comp. Ex. 4 | SPECTRA® 900 yarn | 1200/120 | 19 | 387 | 1 |
| Comp. Ex. 5 | SPECTRA® 900 yarn | 1200/120 | 20 | 409 | 1 |
| Comp. Ex. 6 | SPECTRA® 900 yarn | 1200/120 | 24 | 435 | 1 |
| Comp. Ex. 7 | SPECTRA® 1000 yarn | 1300/240 | 17 | 467 | 1 |
| | | | | | |
| Example | Inventive Fiber | 521/120 | 67 | 585 | 2 |

## Comparative Example 8

The tensile properties of a first prior art drawn UHMWPE yarn were by measured by ASTM D2256-02 and are shown in Table II.

The yarn was subjected to dynamic mechanical analysis in tension using a Rheometrics Solids Analyzer RSA II from Rheometrics Scientific (now TA Instruments, Inc., New Castle, DE). The analyst entered into the instrument the frequency levels (10 and 100 radians/sec), a strain level, the proportion between the static force and the dynamic force (110%), the temperature interval between measurements (2°C), and the cross-sectional area of the yarn sample was determined from its denier (Table II). The DMA sample consisted of a length of the entire yarn bundle. Removal of filaments from the yarn and testing of individual filaments or fractions of the total yarn bundle is to be avoided to prevent damaging or stretching entangled filaments, thereby changing their properties. Problems of sampling yarns with non-uniform filaments across the bundle are also thereby avoided.

The sample and instrument were cooled to the starting temperature and the instrument began measurements. It first measured yarn properties at a frequency of 10 radians/sec for a period of several seconds, averaging the measurements. Then, at the same temperature, it measured yarn properties at a frequency of 100 radians/sec for a period of several seconds averaging and recording the measurements. The instrument then ramped up the temperature 2°C, held the temperature for about 10 seconds, and then began measuring again at frequencies of 10 and 100 radians/sec. This process continued until the final temperature was reached. The average heating rate and standard deviation of heating rate during the run was $2.7 \pm 0.8$°C/min. Because of instrument compliance the actual strain level experienced by the sample differed from the set value. The sample strain varied somewhat during a run as the temperature changed. The average strain and standard deviation was $0.025 \pm 0.005$%.

Plots of the loss modulus, E", versus temperature for this prior art yarn are shown in Figure 5. Peaks were seen in the γ-dispersion at a temperature of -125°C at a frequency of 10 radians/sec, and at a temperature of -119°C at a frequency of 100 radians/sec. Measurements of the heights of the γ-dispersion of the loss modulus above base lines drawn through the wings of the peaks showed the amplitude of the γ-dispersion to be 252 MPa at 10 radians/sec, and 432 MPa at 100 radians/sec. The base line 10 of the γ-dispersion at 100 radians/sec is illustrated in Figure 5. The ratios of the peak values of the loss moduli in the γ-dispersion to the base line loss moduli at the same temperature as the peaks were 1.234:1 at 10 radians/sec and 1.241:1 at 100 radians/sec.

The β-dispersion showed two components: low temperature shoulders at -50°C at both 10 and 100 radians/sec, and distinct peaks at - 17°C and at -14°C for 10 and 100 radians/sec respectively. The lower temperature component of the β-dispersion is hereinafter denoted as β (1), and the higher temperature component is denoted as β (2).

The area between the E" plot and a base line 20 (illustrated in Figure 5 for 100 radians/sec) drawn though the wings of the β-dispersion was determined by numerical integration. The integral strengths of the β-dispersions were 84.9 GPa-°C and 105.3 GPa-°C at 10 and 100 radians/sec respectively.

The α-dispersion showed peaks at 73°C and at 81°C for frequencies of 10 and 100 radians/sec respectively.

The DMA measurements for this yarn are summarized in Table III below.

## Comparative Example 9

The tensile properties of a second prior art drawn UHMWPE yarn were by measured by ASTM D2256-02 and are shown in Table II.

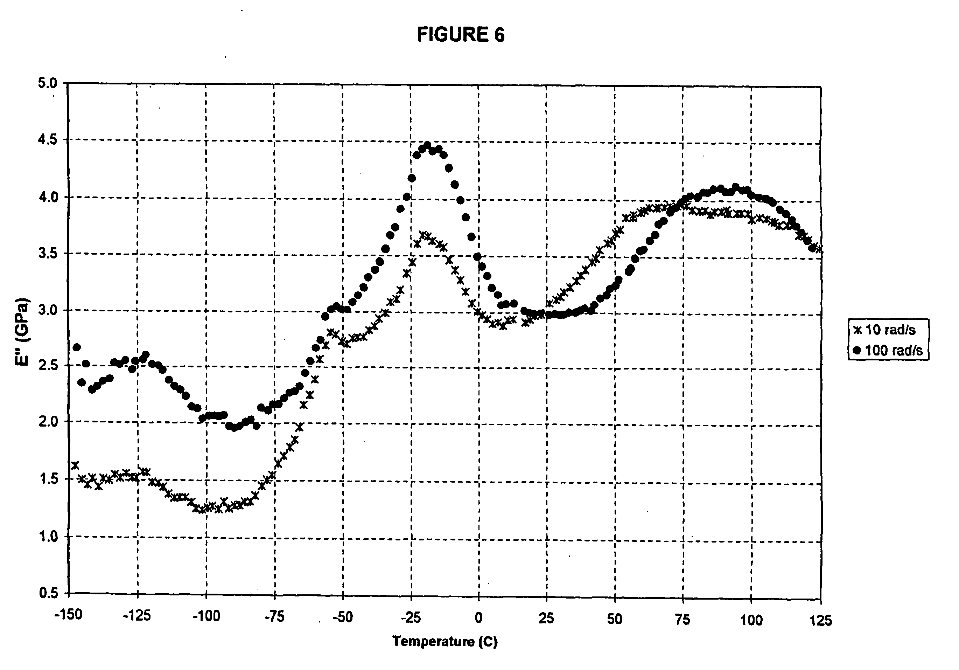

The yarn was subjected to dynamic mechanical analysis in tension as described in Comparative Example 8. Plots of the loss modulus, E", for this prior art yarn are shown in Figure 6. Peaks were seen in the γ-dispersion at a temperature of -123°C at a frequency of 10 radians/sec, and at a temperature of -122°C at a frequency of 100 radians/sec. Measurements of the height of the γ-dispersion above base lines drawn through the wings of the peaks showed the amplitude of the γ-dispersion peaks to be 252 MPa at 10 radians/sec, and 432 MPa at 100 radians/sec. The ratios of the peak values of the loss moduli in the γ-dispersion to the base line loss moduli at the same temperature as the peaks were 1.190:1 at 10 radians/sec and 1.200:1 at 100 radians/sec. The β-dispersion showed β (1) peaks at -55°C and -52°C for 10 and 100 radians/sec respectively, and β (2) peaks at -21°C and -17°C for 10 and 100 radians/sec respectively. The integral strengths of the β-dispersions were 63.0 GPa-°C and 79.6 GPa-°C at 10 and 100 radians/sec respectively.

The α-dispersion showed peaks at 79°C and at 93°C for frequencies of 10 and 100 radians/sec respectively.

The DMA measurements for this yarn are summarized in Table III below.

## Comparative Example 10

The tensile properties of a third prior art drawn UHMWPE yarn were by measured by ASTM D2256-02 and are shown in Table II.

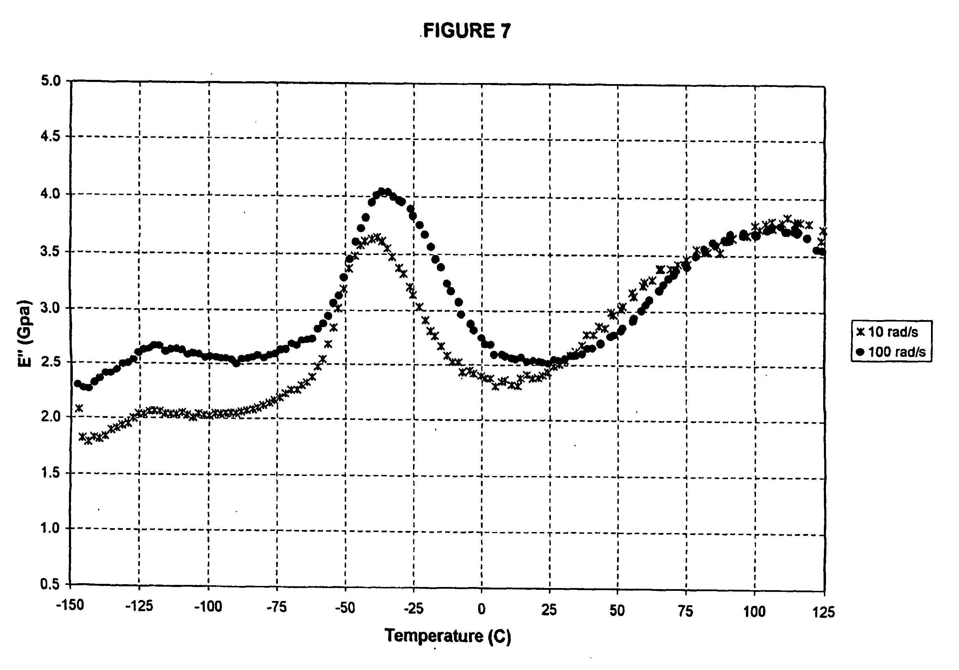

The yarn was subjected to dynamic mechanical analysis in tension as described in Comparative Example 8. Plots of the loss modulus, E", for this prior art yarn are shown in Figure 7. Peaks are seen in the γ-dispersion at a temperature of -118°C at both 10 radians/sec, and at 100 radians/sec. Measurements of the height of the γ-dispersion above base lines drawn through the wings of the peaks show the amplitude of the γ-dispersion peaks to be 182 MPa at 10 radians/sec, and 328 MPa at 100 radians/sec. The ratios of the peak values of the loss moduli in the γ-dispersion to the base line loss moduli at the same temperature as the peaks were 1.097:1 at 10 radians/sec and 1.137:1 at 100 radians/sec.

The β-dispersion had only one component with peaks at -38°C and at -37°C for 10 and 100 radians/sec respectively. The integral strengths of the β-dispersions were 53.9 GPa-°C and 60.5 GPa-°C at 10 and 100 radians/sec respectively.

The α-dispersion shows peaks at 112°C and at 109°C for frequencies of 10 and 100 radians/sec respectively.

The DMA measurements for this yarn are summarized in Table III below.

### Comparative Example 11

The tensile properties of a fourth prior art drawn UHMWPE yarn were by measured by ASTM D2256-02 and are shown in Table II.

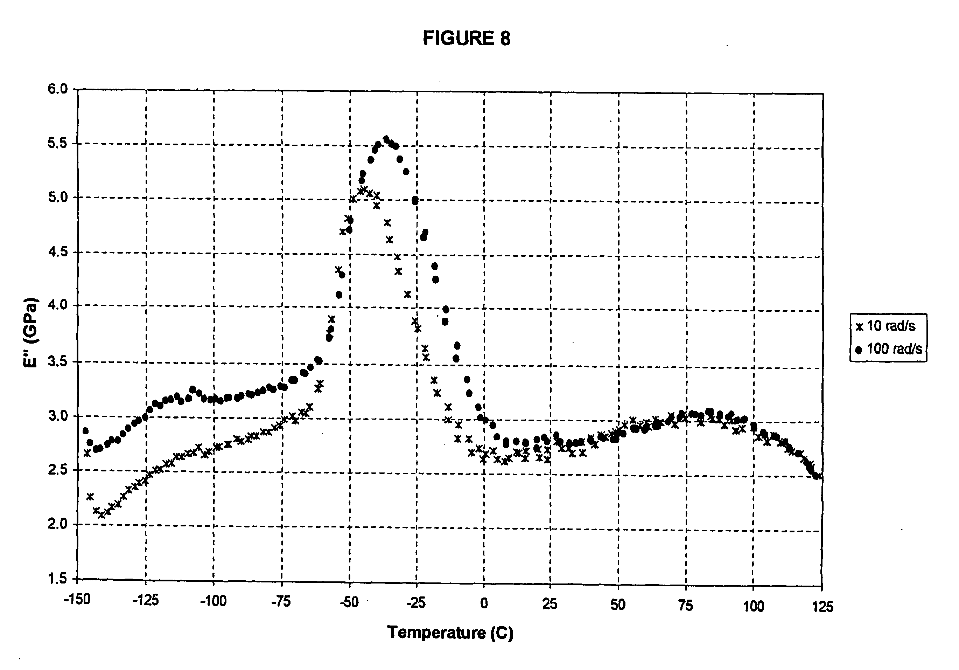

The yarn was subjected to dynamic mechanical analysis in tension as described in Comparative Example 8. Plots of the loss modulus, E", for this prior art yarn are shown in Figure 8. Peaks were seen in the γ-dispersion at temperatures of -106°C and -118°C at 10 radians/sec and 100 radians/sec respectively. Measurements of the height of the γ-dispersion above base lines drawn through the wings of the peaks show the amplitude of the γ-dispersion peaks to be 218 MPa at 10 radians/sec, and 254 MPa at 100 radians/sec. The ratios of the peak values of the loss moduli in the γ-dispersion to the base line loss moduli at the same temperature as the peaks were 1.089:1 at 10 radians/sec and 1.088:1 at 100 radians/sec.

The β-dispersion had only one component with peaks at -43°C and at -36°C for 10 and 100 radians/sec respectively. The integral strengths of the β-dispersions were 85.3 GPa-°C and 99.2 GPa-°C at 10 and 100 radians/sec respectively. The α-dispersion showed peaks at 78°C and at 84°C for frequencies of 10 and 100 radians/sec respectively.

The DMA measurements for this yarn are summarized in Table III below.

### Comparative Example 12

The tensile properties of a fifth prior art drawn UHMWPE yarn were measured by ASTM D2256-02 and are shown in Table II.

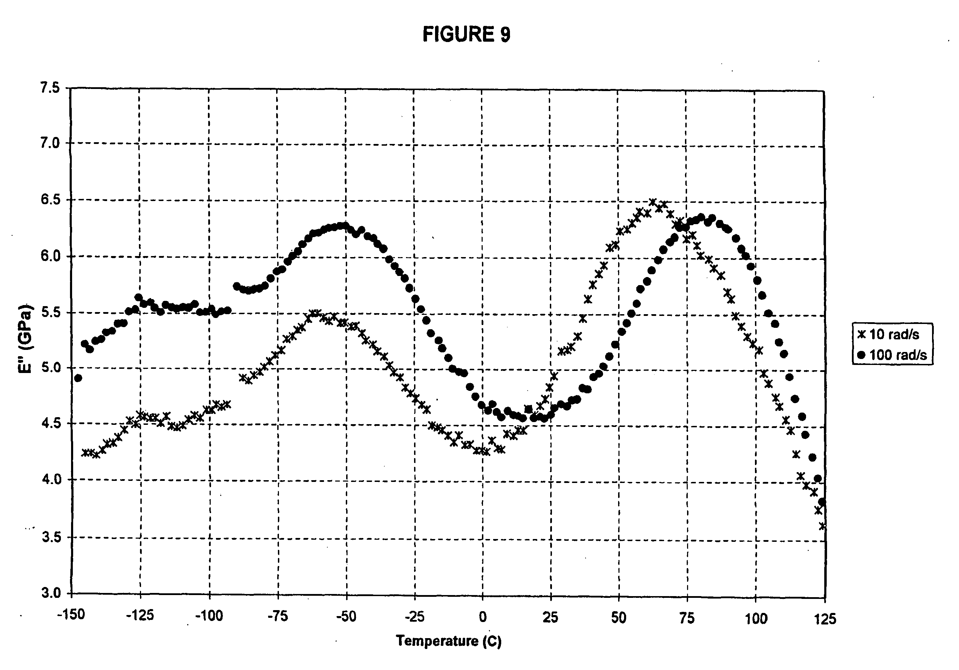

The yarn was subjected to dynamic mechanical analysis in tension as described in Comparative Example 8. Plots of the loss modulus, E", for this prior art yarn are shown in Figure 9. Peaks were seen in the γ-dispersion at temperatures of -120°C and -116°C at 10 radians/sec and 100 radians/sec respectively. Measurements of the height of the γ-dispersion above base lines drawn through the wings of the peaks show the amplitude of the γ-dispersion peaks to be 252 MPa at 10 radians/sec, and 288 MPa at 100 radians/sec. The ratios of the peak values of the loss moduli in the γ-dispersion to the base line loss moduli at the same temperature as the peaks were 1.059:1 at 10 radians/sec and 1.055:1 at 100 radians/sec.

The β-dispersion had only one component with peaks at -58°C and at -50°C for 10 and 100 radians/sec respectively. The integral strengths of the β-dispersions were 54.4 GPa-°C and 61.1 GPa-°C at 10 and 100 radians/sec respectively.

The α-dispersion showed peaks at 67°C and at 83°C for frequencies of 10 and 100 radians/sec respectively. The DMA measurements for this yarn are summarized in Table III below.

### Example 2

A multi-filament polyethylene precursor yarn was gel-spun from a 10 wt.% solution as described in USP 4,551,296. This precursor yarn had been stretched in the solution state, in the gel state and in the solid state. The draw ratio in the solid state was 2.54:1. The yarn of 181 filaments had a tenacity of about 15 g/d as measured by ASTM D2256-02

This precursor yarn was fed from a creel, through a set of restraining rolls at a speed ($V_1$) of 11.1 meters/min into a forced convection air oven in which the internal temperature was 150 ± 1 °C. The air circulation within the oven was in a turbulent state with a time-averaged velocity in the vicinity of the yarn of about 34 meters/min.

The yarn was passed through the oven in a straight line from inlet to outlet over a path length (L) of 21.95 meters and thence to a second set of rolls operating at a speed ($V_2$) of 50 meters/min. The precursor yarn was thereby drawn in the oven at constant tension neglecting the effect of air drag. The yarn was cooled down on the second set of rolls at constant length neglecting thermal contraction producing a yarn of the invention.

The above drawing conditions in relation to Equations 1-4 were as follows:

$$0.25 \leq [\ L/V_1 = 1.98\ ] \leq 20 \text{, min} \qquad \text{Eq. 1}$$

$$3 \leq [\, V_2/\, V_1 = 4.50\,] \leq 20 \qquad\qquad \text{Eq. 2}$$

$$1.7 \leq [\, (V_2 - V_1)/\, L = 1.77\,] \leq 60 \,,\ \text{min}^{-1} \qquad\qquad \text{Eq. 3}$$

$$0.20 \leq [\, 2L/(V_1 + V_2) = 0.72\,] \leq 10 \,,\ \text{min} \qquad\qquad \text{Eq. 4}$$

Hence, each of Equations 1-4 was satisfied.

The denier per filament (dpf) was reduced from 17.7 dpf for the feed yarn to 3.82 dpf for the drawn yarn. Tenacity was increased from about 15 g/d for the feed yarn to about 41.2 g/d for the drawn yarn. The mass throughput of drawn yarn was 3.84 grams/min per yarn end. The tensile properties of this yarn are shown in Table II. The yarn was comprised of polyethylene having an intrinsic viscosity in decalin at 135°C; of 11.5dl/g, fewer than about 0.5 methyl groups per thousand carbon atoms, and contained less than 2 wt% of other constituents.

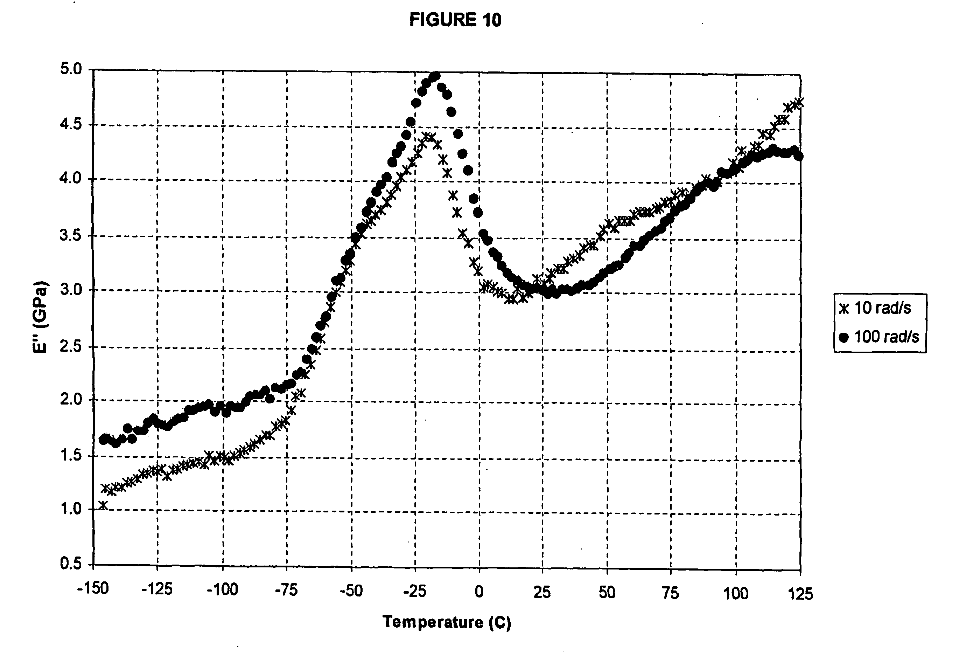

The yarn of the invention was subjected to dynamic mechanical analysis in tension as described in Comparative Example 8. Plots of the loss modulus, E", for this yarn are shown in Figure 10. A peak in the γ-dispersion having a magnitude at least 100 MPa above a base line was absent at 10 radians/sec. A peak in the γ-dispersion having a magnitude at least 130 MPa above a base line was absent at 100 radians/sec.

The β-dispersion showed β (1) shoulders at -50°C for both 10 and 100 radians/sec respectively, and β (2) peaks at -21 °C and -17°C for 10 and 100 radians/sec respectively. The integral strengths of the β-dispersions were 92.5 GPa-°C and 107 GPa-°C at 10 and 100 radians/sec respectively.

The α-dispersion was absent at a frequency of 10 radians/sec and had a peak at 123°C at 100 radians/sec.

The DMA measurements for the inventive yarn are summarized in Table III

## Example 3

A multi-filament polyethylene precursor yarn was gel-spun from a 10 wt.% solution as described in USP 4,551,296. This precursor yarn had been stretched in the solution state, in the gel state and in the solid state. The draw ratio in the solid state was 1.55:1. The yarn of 181 filaments had a tenacity of 15 g/d. This precursor yarn was fed from a creel, through a set of restraining rolls and stretched in a forced circulation air oven at conditions similar to those of Example 2.

The drawn multi-filament yarn of the invention thereby produced possessed a tenacity of 39.7 g/d as measured by ASTM D2256-02. The tensile properties of this yarn are shown in Table II. The yarn was comprised of polyethylene having an intrinsic viscosity in decalin at 135°C of 12 dl/g, fewer than 0.5 methyl groups per thousand carbon atoms, and contained less than 2 wt% of other constituents.

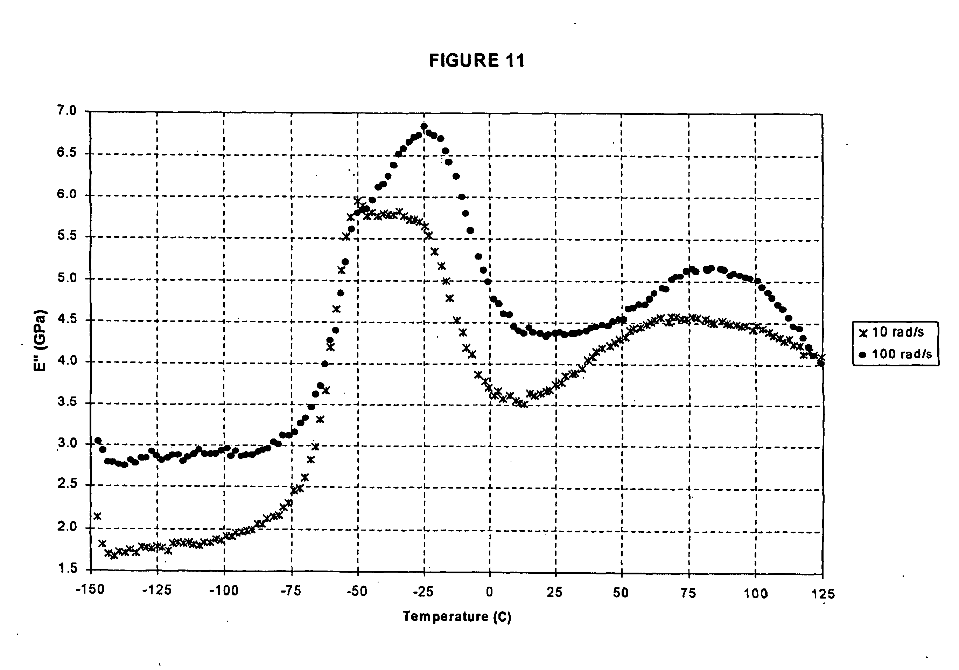

The yarn of the invention was subjected to dynamic mechanical analysis in tension as described in Comparative Example 8. Plots of the loss modulus, E", for this yarn are shown in Figure 11. A peak in the γ-dispersion having a magnitude at least 100 MPa above a base line was absent at 10 radians/sec. A peak in the γ-dispersion having a magnitude at least 130 MPa above a base line was absent at 100 radians/sec.

The β-dispersion showed β (1) shoulders at -50°C at both 10 and 100 radians/sec, and β (2) peaks at -34°C and -25°C at 10 and 100 radians/sec respectively. The integral strengths of the β-dispersions were 149 GPa-°C and 152 GPa-°C at 10 and 100 radians/sec respectively.

The α-dispersion showed peaks at 74°C and at 84°C for frequencies of 10 and 100 radians/sec respectively.

The DMA measurements for the inventive yarn are summarized in Table III below.

## Example 4

This example was a complete repetition of Example 3 beginning with the preparation of the precursor yarn. The drawn multi-filament yarn of the invention possessed a tenacity of 38.9 g/d as measured by ASTM D2256-02. The tensile properties of this yarn are shown in Table II. The yarn was comprised of polyethylene having an intrinsic viscosity in decalin at 135°C of 12 dl/g, fewer than about 0.5 methyl groups per thousand carbon atoms, and contained less than 2 wt% of other constituents.

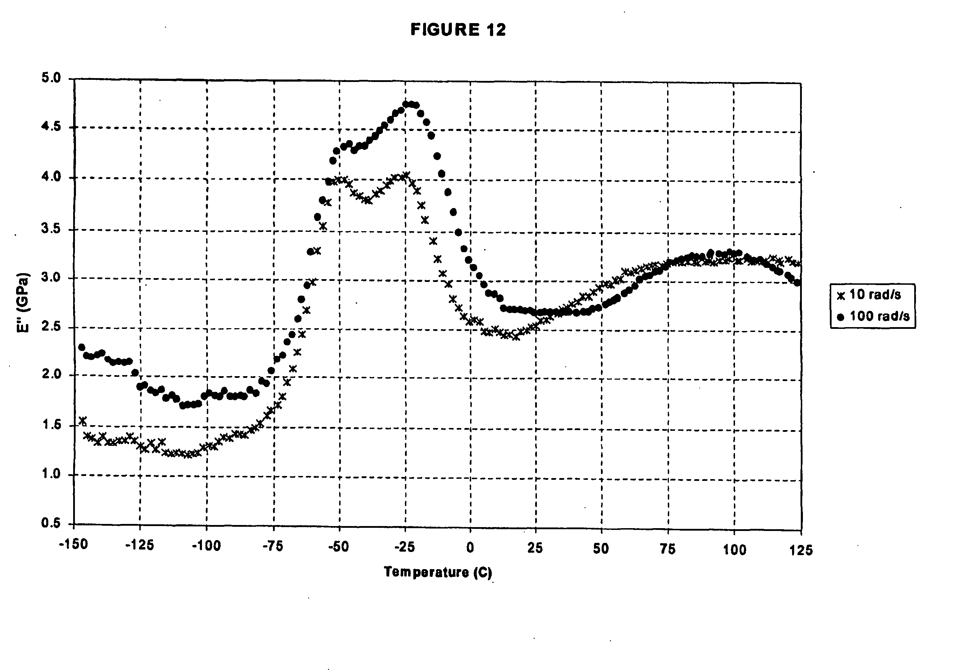

The yarn of the invention was subjected to dynamic mechanical analysis in tension as described in Comparative Example 8. Plots of the loss modulus, E", for this yarn are shown in Figure 12. A peak in the γ-dispersion having a magnitude at least 100 MPa above a base line was absent at 10 radians/sec. A peak in the γ-dispersion having a magnitude at least 130 MPa above a base line was absent at 100 radians/sec.

The β-dispersion showed β (1) peaks at -50°C and -48°C for 10 and 100 radians/sec respectively, and β (2) peaks at -25°C and -22°C for 10 and 100 radians/sec respectively. The integral strengths of the β-dispersions were 111 GPa-°C and 135 GPa-°C at 10 and 100 radians/sec respectively.

The α-dispersion showed peaks at 81°C and at 95°C for frequencies of 10 and 100 radians/sec respectively.

The DMA measurements for the inventive yarn are summarized in Table II below.

It has been seen that the DMA signatures of drawn multi-filament gel-spun polyethylene yarns of the invention differ from those of prior art gel-spun polyethylene yarns in one or more of the following ways, taken individually or in several combinations.

- A γ-dispersion peak in the loss modulus, if any, is of very low amplitude.
- The β-dispersion of the loss modulus is of high integral strength.
- A peak in the α-dispersion is absent at a frequency of 10 radians/sec.

The inventive yarns also show two components in the β-dispersion of the loss modulus.

Without being held to a particular theory, it is believed that the essential absence of γ-dispersion peak in the loss modulus for the inventive yarns is reflective of a low defect density in the crystalline phase, i.e. long runs of straight chain all *trans*- $-(CH_2)_n$- sequences. This is consistent with the DSC evidence reported above. Accepting that the origin of the β-dispersion is molecular motion in the inter-crystalline regions, the presence of two components in the β-dispersion is believed to be reflective of the presence of two orthorhombic crystalline phases with different modes of connectivity in the inter-crystalline regions. This is consistent with the x-ray evidence reported above. The unusually high integral strength of the β-dispersion of the loss modulus is suggestive of a high degree of molecular alignment in the intercrystalline regions. In total, the DMA data suggests, and is consistent with, a high degree of molecular alignment and crystalline perfection in the yarns of the invention.

**Table II**

| Tensile Properties of Yarns Characterized by DMA | | | | | |
|---|---|---|---|---|---|
| Example | Yarn Denier | Tenacity, g/d | Modulus, g/d | Elongation at Break,% | Energy-to Break, J/g |
| Comp.8 | 1189 | 30.4 | 885 | 3.7 | 56 |
| Comp.9 | 1326 | 35.6 | 1120 | 3.5 | 61 |
| Comp. 10 | 1587 | 35.3 | 1062 | 3.6 | 62 |
| Comp. 11 | 1591 | 39.0 | 1205 | 3.4 | 65 |
| Comp. 12 | 422 | 38.6 | 1122 | 3.5 | n.d. |
| 2 | 691 | 41.2 | 1280 | 3.5 | n.d. |
| 3 | 1481 | 39.7 | 1291 | 3.3 | 65 |
| 4 | 1490 | 38.9 | 1258 | 3.3 | 64 |
| n.d. - not determined | | | | | |

**Table III DMA**

| Characteristics of Prior Art and Inventive Yarns | | | | | | | |
|---|---|---|---|---|---|---|---|
| | Alpha Dispersion | Beta Dispersion | | | Gamma Dispersion | | |
| Example | Peak Temperature | Beta (1) | Beta (2) | Integral Strength | Peak Temperature | Height Over Base Line | Peak-to-Base Line Ratio |
| | T, C | T, C | T, C | GPa-deg.C | T, C | MPa | Dimensionless |

(continued)

| 10 rad/sec | | | | | | | |
|---|---|---|---|---|---|---|---|
| Comp.8 | 73 | -50 | -17 | 84.9 | -125 | 252 | 1.234 |
| Comp.9 | 79 | -55 | -21 | 63.0 | -123 | 252 | 1.190 |
| Comp.10 | 112 | Absent | -38 | 53.9 | -118 | 182 | 1.097 |
| Comp. 11 | 78 | Absent | -43 | 85.3 | -106 | 218 | 1.089 |
| Comp.12 | 67 | -58 | Absent | 54.4 | -120 | 252 | 1.059 |
| 2 | Absent | -50 | -21 | 92.5 | Absent | <100 | 1.000 |
| 3 | 74 | -50 | -34 | 149 | Absent | <100 | 1.000 |
| 4 | 81 | -50 | -25 | 111 | Absent | <100 | 1.000 |
| 100 rad/sec | | | | | | | |
| Comp.8 | 81 | -50 | -14 | 105.3 | -119 | 432 | 1.241 |
| Comp.9 | 93 | -52 | -17 | 79.6 | -122 | 432 | 1.200 |
| Comp.10 | 109 | Absent | -37 | 60.5 | -118 | 328 | 1.137 |
| Comp. 11 | 84 | Absent | -36 | 99.2 | -118 | 254 | 1.088 |
| Comp.12 | 83 | -50 | Absent | 61.1 | -116 | 288 | 1.055 |
| 2 | 123 | -50 | -17 | 107 | Absent | <130 | 1.000 |
| 3 | 84 | -50 | -25 | 152 | Absent | <130 | 1.000 |
| 4 | 95 | -48 | -22 | 135 | Absent | <130 | 1.000 |

## Example 5

The inventive yarn described in Example 3 above was used to construct articles of the invention comprising cross-plied fiber reinforced laminates. Several rolls of the inventive yarn of Example 3 were suppliec from a creel and were passed through a combing station to form a unidirectional network. The fiber network was passed over and under stationary bars to spread the yarns into thin layers. The fiber network was then carried under a roll immersed in a bath of a cyclohexane solution of a KRATON® D1107 styrene-isoprene-styrene block copolymer matrix to completely coat each filament.

The coated fiber network was passed through a squeeze roll at the exit of the bath to remove excess sealant dispersion. The coated fiber network was placed on a 0.35 mil (0.00089 cm) polyethylene film carrier web and passed through a heated oven to evaporate the cyclohexane and form a coherent fiber sheet containing 20% wt.% KRATON® matrix. The carrier web and unidirectional fiber sheet were then wound up on a roller in preparation for construction of laminates.

Two different laminates were constructed from the rolls prepared above. A two ply laminate of the invention designated type PCR was formed by placing two rolls of the sheet material described above on the cross-plying machine described in U.S. Patent 5,173,138. The carrier web was stripped off and the two unidirectional fiber sheets were cross-plied 0°/90° and consolidated at a temperature of 115°C under a pressure of 500 psi (3.5 MPa) to create a laminate.

A four ply laminate of the invention, designated type LCR, consisting of two cross-plied fiber sheets with polyethylene films on the outside surfaces, was similarly prepared. Two rolls of the sheet material described above, including the polyethylene film carrier webs, were placed on the cross-plying machine, cross-plied 0°/90°, fiber-to-fiber, with the polyethylene carrier webs on the outside and then consolidated at a temperature of 115°C under a pressure of 500 psi (3.5 MPa) to create a laminate.

Composite targets for ballistic testing were constructed from the above laminates. Rigid targets were constructed by stacking and cross-plying several layers of the PCR laminates to the desired areal density and then re-molding at a temperature of 115°C under a pressure of 500 psi (3.5 MPa). Flexible targets were constructed by cross-plying and loosely stacking several layers of the LCR laminates to the desired areal density.

Ballistic testing of the laminates constructed with the inventive yarn was conducted in comparison with commercially available SPECTRA SHIELD® laminates of the same PCR and LCR types prepared from SPECTRA® 1000 yarn. The ballistic testing was conducted in accord with MIL-STD 662 E.

The results are shown in Table IV.

The V50 velocity is that velocity at which the probability that a projectile will penetrate is 50%. SEAC is the specific energy absorption capability of the composite per unit areal density specific to a given projectile. Its units are Joules/g/m$^2$, abbreviated as J-m$^2$/g.

It will be seen that the articles of the invention constructed with the inventive yarn possessed higher V50's and higher SEAC's than the targets prepared with the prior art SPECTRA®1000 yarn over a range of projectiles.

**TABLE IV**

| Ballistic Test Results | | | | | | | | |
|---|---|---|---|---|---|---|---|---|
| Projectile | 17 gr. Frag. Simulator | | 17 gr. Frag. Simulator | | 9mm FMJ | | 7.62 x 51mm M80 Ball | |
| Shield Construction | PCR | | LCR | | LCR | | PCR | |
| Fiber | S1000 | Inventive Fiber | S1000 | Inventive Fiber | S1000 | Inventive Fiber | S1000 | Inventive Fiber |
| Areal Density, psf | 1.03 | 1.02 | n.d. | 0.784 | 0.769 | 0.769 | 3.54 | 3.48 |
| V50, ft/sec | 1815 | 1916 | n.d. | 1886 | 1486 | 1607 | 2233 | 2802 |
| V50, meters/sec | 553 | 584 | n.d. | 575 | 453 | 490 | 681 | 854 |
| SEAC, J-m2/g | 30 | 38 | n.d. | 47.5 | 219 | 255 | 128 | 204 |
| n.d. - not determined | | | | | | | | |

**Claims**

1. A polyethylene multi-filament yarn comprising a polyethylene having an intrinsic viscosity in decalin at 135°C of from 5 dl/g to 35 dl/g, fewer than two methyl groups per thousand carbon atoms, and less than 2 wt. % of other constituents, said multi-filament yarn having a tenacity of at least 17 g/d as measured by ASTM D2256-02, wherein filaments of said yarn have a peak value of the ordered-sequence length distribution function, F(L), as determined at 23°C from the low frequency Raman band associated with the longitudinal acoustic mode (LAM-1), at a straight chain segment length L of at least 40 nanometers.

2. The polyethylene multi-filament yarn of claim 1, wherein the filaments have a peak value at a straight chain segment length L of at least 45 nanometers.

3. The polyethylene multi-filament yarn of claim 1, wherein the filaments have a peak value at a straight chain segment length L of at least 50 nanometers.

4. The polyethylene multi-filament yarn of claim 1, wherein the filaments have a peak value at a straight chain segment length L of at least 55 nanometers.

5. The polyethylene multi-filament yarn of claim 1, wherein the filaments have a peak value at a straight chain segment length L of from 50 to 150 nanometers.

6. A polyethylene multi-filament yarn according to claim 1, wherein the yarn has a parameter of intrachain cooperativity of the melting process, v, of at least 535 as determined by differential scanning calorimetry (DSC) of the first polyethylene melting endotherm at a heating rate extrapolated to 0°K/min from at least 3 melting scans at heating rates less than 2°K/min, said DSC calorimetry being conducted of a filament segment of about 0.03 mg mass cut into pieces of about 5 mm length wrapped in parallel array in a Wood's metal foil and placed in an open sample pan.

7. A polyethylene multi-filament yarn according to claim 1, wherein the intensity of the (002) x-ray reflection of at least one said filament of said yarn shows two distinct peaks measured at room temperature under no external load.

8. A polyethylene multi-filament yarn according to claim 1, wherein filaments of said yarn exhibit:

   a) two distinct peaks in the intensity of the (002) x-ray reflection measured at room temperature under no external load; and
   b) a parameter of intrachain cooperativity of the melting process, v, of at least 535 as determined by differential scanning calorimetry (DSC) of the first polyethylene melting endotherm at a heating rate extrapolated to 0°K/min from at least 3 melting scans at heating rates less than 2°K/min, said DSC calorimetry being conducted of a filament segment of about 0.03 mg mass cut into pieces of about 5 mm length wrapped in parallel array in a Wood's metal foil and placed in an open sample pan.

9. An article comprising a drawn polyethylene multi-filament yarn described in any of claims 1-8.

10. The article of claim 9, comprising at least one network of said drawn polyethylene multi-filament yarns.

11. The article of claim 10, comprising a plurality of networks of said drawn polyethylene multi-filament yarns, said networks being arranged in unidirectional layers, the direction of the fibers in one layer being at an angle to the direction of fibers in adjacent layers.


**Patentansprüche**

1. Multifiles Polyethylengarn, umfassend ein Polyethylen mit einer Eigenviskosität in Decalin bei 135°C von 5 dl/g bis 35 dl/g, je tausend Kohlenstoffatome weniger als zwei Methylgruppen und weniger als 2 Gew.-% an anderen Bestandteilen, wobei das multifile Garn nach ASTM D2256-02 eine Feinheitsfestigkeit von mindestens 17 g/den aufweist, wobei die Filamente des Garns in der bei 23°C aus der mit der akustischen Längsschwingung (LAM-1) assoziierte niederfrequente Ramanbande bestimmte reihenfolgebezogene Längenverteilungsfunktion F(L) einen Maximalwert bei einer geradkettigen Segmentlänge L von mindestens 40 Nanometer aufweist.

2. Multifiles Polyethylengarn nach Anspruch 1, bei dem die Filamente einen Maximalwert bei einer geradkettigen Segmentlänge L von mindestens 45 Nanometer aufweisen.

3. Multifiles Polyethylengarn nach Anspruch 1, bei dem die Filamente einen Maximalwert bei einer geradkettigen Segmentlänge L von mindestens 50 Nanometer aufweisen.

4. Multifiles Polyethylengarn nach Anspruch 1, bei dem die Filamente einen Maximalwert bei einer geradkettigen Segmentlänge L von mindestens 55 Nanometer aufweisen.

5. Multifiles Polyethylengarn nach Anspruch 1, bei dem die Filamente einen Maximalwert bei einer geradkettigen Segmentlänge L von 50 bis 150 Nanometer aufweisen.

6. Multifiles Polyethylengarn nach Anspruch 1, bei dem das Garn einen durch Differential Scanning Calorimetry (DSC) an einem in etwa 5 mm lange Stücke zerschnittenen, parallel angeordnet in einer Woodschen Metallfolie eingewickelten und in einem offenen Probenpfännchen angeordneten etwa 0,03 mg schweren Filamentsegment in mindestens 3 Schmelzscans bei Heizgeschwindigkeiten von weniger als 2°K/min bei einer auf 0°K/min extrapolierten Heizgeschwindigkeit ermittelten ersten Polyethylenschmelzendotherm bestimmten Parameter der Intrakettenkooperativität des Schmelzprozesses, v, von mindestens 535 aufweist.

7. Multifiles Polyethylengarn nach Anspruch 1, bei dem die Intensität des (002)-Röntgenreflexes mindestens eines Filaments des Garns, gemessen bei Raumtemperatur ohne äußere Belastung, zwei deutliche Maxima zeigt.

8. Multifiles Polyethylengarn nach Anspruch 1, bei dem die Filamente des Garns

   a) bei der Intensität des (002)-Röntgenreflexes, gemessen bei Raumtemperatur ohne äußere Belastung, zwei deutliche Maxima und
   b) einen durch Differential Scanning Calorimetry (DSC) an einem in etwa 5 mm lange Stücke zerschnittenen, parallel angeordnet in einer Woodschen Metallfolie eingewickelten und in einem offenen Probenpfännchen angeordneten etwa 0,03 mg schweren Filamentsegment in mindestens 3 Schmelzscans bei Heizgeschwindigkeiten von weniger als 2°K/min bei einer auf 0°K/min extrapolierten Heizgeschwindigkeit ermittelten ersten Polyethylenschmelzendotherm bestimmten Parameter der Intrakettenkooperativität des Schmelzprozesses, v, von mindestens 535 aufweisen.

9. Erzeugnis, umfassend ein verstrecktes Polyethylenmultifilamentgarn gemäß einem der Ansprüche 1-8.

10. Erzeugnis nach Anspruch 9, umfassend mindestens ein Netz der verstreckten Polyethylenmultifilamentgarne.

11. Erzeugnis nach Anspruch 10, umfassend mehrere Netze der verstreckten Polyethylenmultifilamentgarne, wobei die Netze in uniaxialen Schichten angeordnet sind, wobei die Faserrichtung einer Schicht jeweils unter einem Winkel gegenüber der Faserrichtung benachbarter Lagen verläuft.

**Revendications**

1. Fil multifilament en polyéthylène comprenant un polyéthylène dont la viscosité intrinsèque mesurée en décalines à 135 °C varie de 5 dl/g à 35 dl/g, moins de deux groupes méthyle par 1000 atomes de carbone et moins de 2 % en poids d'autres constituants, ledit fil multifilament possédant une ténacité d'au moins 17 g/d telle que mesurée selon la norme ASTM D2256-02, dans lequel des filaments dudit fil possèdent une valeur de crête de la fonction de distribution de longueurs d'une séquence ordonnée, F(L), telle que déterminée à 23 °C à partir de la bande Raman à basse fréquence associée au mode acoustique longitudinal (LAM-1), à une longueur de segment de chaîne droite L d'au moins 40 nanomètres.

2. Fil multifilament en polyéthylène de la revendication 1, dans lequel les filaments possèdent une valeur de crête à une longueur de segment de chaîne droite L d'au moins 45 nanomètres.

3. Fil multifilament en polyéthylène de la revendication 1, dans lequel les filaments possèdent une valeur de crête à une longueur de segment de chaîne droite L d'au moins 50 nanomètres.

4. Fil multifilament en polyéthylène de la revendication 1, dans lequel les filaments possèdent une valeur de crête à une longueur de segment de chaîne droite L d'au moins 55 nanomètres.

5. Fil multifilament en polyéthylène de la revendication 1, dans lequel les filaments possèdent une valeur de crête à une longueur de segment de chaîne droite L de 50 à 150 nanomètres.

6. Fil multifilament en polyéthylène selon la revendication 1, dans lequel le fil possède un paramètre de coopérativité intrachaîne du procédé de fusion, v, d'au moins 535 tel que déterminé par calorimétrie à balayage différentiel (DSC) du premier endotherme de fusion du polyéthylène à une vitesse de chauffage extrapolée à 0 °C/min d'au moins trois balayages de fusion à des vitesses de chauffage inférieures à 2 °K/min, ladite calorimétrie DSC étant réalisée sur un segment de filament d'environ 0,03 mg de masse coupé en morceaux d'environ 5 mm de longueur enveloppés dans un réseau parallèle dans une feuille métallique de Wood et placés dans un plateau ouvert d'échantillons.

7. Fil multifilament en polyéthylène selon la revendication 1, dans lequel l'intensité de réflexion des rayons X (002) d'au moins un desdits filaments dudit fil montre deux crêtes distinctes mesurées à la température ambiante sans charge externe.

8. Fil multifilament en polyéthylène selon la revendication 1, dans lequel des filaments dudit fil présentent :

   a) deux crêtes distinctes dans l'intensité de la réflexion des rayons X (002) mesurées à la température ambiante sans charge externe ; et
   b) un paramètre de coopérativité intrachaîne du procédé de fusion, v, d'au moins 535 tel que déterminé par calorimétrie à balayage différentiel (DSC) du premier endotherme de fusion du polyéthylène à une vitesse de chauffage extrapolée à 0 °C/min d'au moins trois balayages de fusion à des vitesses de chauffage inférieures à 2 °K/min, ladite calorimétrie DSC étant réalisée sur un segment de filament d'environ 0,03 mg de masse coupé en morceaux d'environ 5 mm de longueur enveloppés dans un réseau parallèle dans une feuille métallique de Wood et placés dans un plateau ouvert d'échantillons.

**9.** Article comprenant un fil multifilament en polyéthylène étiré décrit dans l'une quelconque des revendications 1 à 8.

**10.** Article de la revendication 9, comprenant au moins un réseau desdits fils multifilaments en polyéthylène étirés.

**11.** Article de la revendication 10, comprenant une pluralité de réseaux desdits fils multifilaments en polyéthylène étirés, lesdits réseaux étant disposés en des couches unidirectionnelles, la direction des fibres dans une couche étant à un angle par rapport à la direction des fibres dans les couches adjacentes.

# FIGURE 1

Raman shift, cm⁻¹

# FIGURE 2

Fig. 2(a)

Fig. 2(b)

Fig. 2(c)

L, nm

# FIGURE 3

## FIGURE 4

(002)

FIGURE 5

EP 2 028 295 B1

**FIGURE 6**

EP 2 028 295 B1

FIGURE 7

FIGURE 8

EP 2 028 295 B1

FIGURE 9

FIGURE 10

FIGURE 11

EP 2 028 295 B1

**FIGURE 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US PS4551296 A
- US 4663101 A
- US 6448659 B
- US 5741451 A
- US 20050093200 A
- US P5443904 A
- WO 0234980 A1
- US P4551296 A
- US 5173138 A

### Non-patent literature cited in the description

- **P. Smith ; P. J. Lemstra ; B. Kalb ; A. J. Pennings.** *Poly. Bull.,* 1979, vol. 1, 731
- **K.P. Menard.** Encyclopedia of Polymer Science and Technology. John Wiley & Sons, 2004, vol. 9, 563-589
- **Khanna et al.** *Macromolecules,* 1985, vol. 18, 1302-1309
- **K.M.Sinnott.** *J. Appl Phys,* 1966, vol. 37, 3385
- **R.H. Boyd.** *Polymer,* 1985, vol. 26, 323
- **Roy et al.** *Macromolecules,* 1988, vol. 21 (6), 1741
- **R.G. Snyder et al.** Determination of the Distribution of Straight-Chain Segment Lengths in Crystalline Polyethylene from the Raman LAM-1 Band. *J. Poly. Sci., Poly. Phys. Ed.,* 1978, vol. 16, 1593-1609
- **Mizushima et al.** *J. Amer. Chem., Soc.,* 1949, vol. 71, 1320
- **V.A. Bershtein ; V.M. Egorov.** Parameter of Intrachain Cooperativity of the Melting Process. *Differential Scanning Calorimetry of Polymers: Physics, Chemistry, Analysis, Technology,* 1993, 141-143